(19) Europäisches Patentamt
European Patent Office
Office européen des brevets

(11) **EP 4 050 472 A1**

(12) **EUROPEAN PATENT APPLICATION**

(43) Date of publication:
**31.08.2022 Bulletin 2022/35**

(21) Application number: **21209344.7**

(22) Date of filing: **19.11.2021**

(51) International Patent Classification (IPC):
**G06F 7/544** $^{(2006.01)}$

(52) Cooperative Patent Classification (CPC):
**G06F 7/544**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.02.2021 JP 2021027815**

(71) Applicant: **FUJITSU LIMITED**
**Kawasaki-shi, Kanagawa 211-8588 (JP)**

(72) Inventors:
• **YAMAGUCHI, Jumpei**
**Kawasaki-shi, 211-8588 (JP)**
• **FURUKAWA, Kazuyoshi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57) An information processing device that executes solving of a shortest vector problem using an annealing computer that performs a single-spin flip, the information processing device including: a dividing unit that divides the shortest vector problem including a basis vector into a predetermined number of ranges, the basis vector being a multidimensional integer vector; and a generation unit that generates, for each of the predetermined number of ranges, a specific term that causes a transition of a linear sum of specific variables among respective variables included in the basis vector, and generates, for each of the predetermined number of ranges, a Hamiltonian of a pseudo-multi-spin flip in which the specific term is added to the Hamiltonian of the single-spin flip.

## FIG. 1

INFORMATION PROCESSING DEVICE 10

n-DIMENSIONAL SVP

RANGE 1
$$\min_{x_1 \geq 1} \|x_1 \mathbf{b}_1\|^2$$

RANGE j
$$\min_{\substack{x_1,\ldots,x_{j-1} \in \mathbb{Z} \\ x_j \geq 1}} \|x_1 \mathbf{b}_1 + \cdots + x_j \mathbf{b}_j\|^2$$

RANGE n
$$\min_{\substack{x_1,\ldots,x_{n-1} \in \mathbb{Z} \\ x_n \geq 1}} \|x_1 \mathbf{b}_1 + \cdots + x_n \mathbf{b}_n\|^2$$

CONVERSION INTO HAMILTONIAN

ANNEALING COMPUTER 50

n MINIMUM SOLUTIONS

GENERATE COEFFICIENT MATRIX

GENERATE TERM OF PSEUDO-MULTI-SPIN FLIP

GENERATE HAMILTONIAN

RESTRICTION CONDITION

EP 4 050 472 A1

**Description**

FIELD

The embodiments discussed herein are related to an information processing program, an information processing method, and an information processing device.

BACKGROUND

Single-spin flip and multi-spin flip are known as methods for calculating the minimum value of a Hamiltonian represented by a binary multivariable quadratic polynomial. The single-spin flip is a method of executing an annealing calculation by inverting a certain variable $x_i$ "from 0 to 1" or "from 1 to 0" to find an optimal solution, and the multi-spin flip is a method of executing the annealing calculation by inverting a plurality of certain variables $(x_{i1},..., x_{ik})$ at the same time.

In recent years, with respect to the shortest vector problem (SVP), which is one of the problems underlying the security of lattice-based cryptography, has been evaluated to see what scale of the problem can be solved by an annealing computer that performs annealing calculations. For example, as a technique for solving the SVP with the annealing computer, the SVP is divided into n ranges to generate n Hamiltonians, and the minimum value of each is solved by the annealing computer. Then, a technique to assume the smallest solution among the n solutions as the solution for the SVP is known.

Examples of the related art include as follows: Japanese Laid-open Patent Publication No. 2009-223848; Japanese National Publication of International Patent Application No. 2018-529142; U.S. Patent Application Publication No. 2009/0299947; and U.S. Patent Application Publication No. 2018/0218279.

SUMMARY

TECHNICAL PROBLEM

Incidentally, tuning for large scale or acceleration of the annealing computer that performs the multi-spin flip has not been achieved, and it is common to use an annealing computer that performs the single-spin flip. On the other hand, in the annealing computer that performs the single-spin flip, a transition destination candidate is only the addition of an integral multiple of one basis vector, and there are few candidates. Thus, solutions cannot go beyond localized solutions and an enormous amount of time is required to calculate the minimum solution, or there may be cases where the minimum solution cannot be calculated.

In one aspect, it is desirable to provide an information processing program, an information processing method, and an information processing device capable of efficiently solving a shortest vector problem using an annealing computer that performs the single-spin flip.

SOLUTION TO PROBLEM

According to an embodiment of one aspect of the invention, there is provided an information processing device that executes solving of a shortest vector problem using an annealing computer that performs a single-spin flip. In an example, the information processing device includes: a dividing unit that divides the shortest vector problem including a basis vector into a predetermined number of ranges, the basis vector being a multidimensional integer vector; and a generation unit that generates, for each of the predetermined number of ranges, a specific term that causes a transition of a linear sum of specific variables among respective variables included in the basis vector, and generates, for each of the predetermined number of ranges, a Hamiltonian of a pseudo-multi-spin flip in which the specific term is added to the Hamiltonian of the single-spin flip.

ADVANTAGEOUS EFFECTS OF INVENTION

According to one embodiment, a shortest vector problem using an annealing computer that performs single-spin flip may be efficiently solved.

BRIEF DESCRIPTION OF DRAWINGS

The invention is described, by way of example only, with reference to the following drawings, in which:

FIG. 1 is a diagram describing an information processing device according to a first embodiment;

FIG. 2 is a diagram describing a Hamiltonian of single-spin flip;

FIG. 3 is a diagram describing a problem of the Hamiltonian of the single-spin flip;

FIG. 4 is a diagram describing a multi-spin flip;

FIG. 5 is a functional block diagram illustrating a functional configuration of the information processing device according to the first embodiment;

FIG. 6 is a diagram describing generation of a coefficient matrix;

FIG. 7 is a diagram describing generation of a pseudo-multi-spin flip term;

FIG. 8 is a diagram describing restrictions of the pseudo-multi-spin flip term;

FIG. 9 is a diagram describing M that achieves a pseudo-multi-spin flip;

FIG. 10 is a diagram describing the M that achieves the pseudo-multi-spin flip;

FIG. 11 is a diagram describing an example of selection of the M that achieves the pseudo-multi-spin flip;

FIG. 12 is a diagram describing generation of the Hamiltonian;

FIG. 13 is a sequence diagram illustrating a flow of processing of solving a shortest vector problem;

FIG. 14 is a diagram describing a specific problem setting;

FIG. 15 is a diagram describing an example of solving a specific problem;

FIG. 16 is a diagram describing an example of solving a specific problem;

FIG. 17 is a diagram describing another example of the pseudo-multi-spin flip term; and

FIG. 18 is a diagram describing a hardware configuration example.

DESCRIPTION OF EMBODIMENTS

Hereinafter, embodiments of an information processing program, an information processing method, and an information processing device disclosed in the present application will be described in detail on the basis of the drawings. Note that the embodiments are not limited to the present disclosure. Furthermore, each of the embodiments may be appropriately combined within a range without inconsistency.

[First Embodiment]

[Description of Information Processing Device]

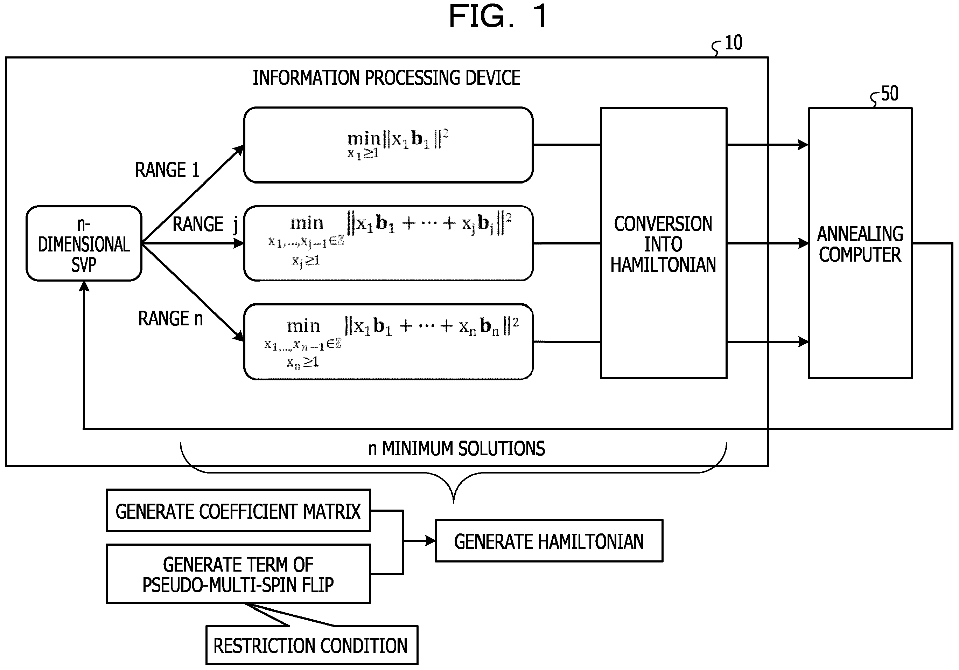

FIG. 1 is a diagram describing an information processing device 10 according to a first embodiment. As illustrated in FIG. 1, the information processing device 10 is one example of a computer device that solves a shortest vector problem, which is one of the problems underlying the security of lattice-based cryptography, and is connected to an annealing computer 50 that performs the single-spin flip.

The information processing device 10 divides the SVP into n ranges (range 1 to range n) to generate n Hamiltonians, inputs each Hamiltonian to the annealing computer 50, acquires n solutions from the annealing computer 50, and uses the smallest solution as the solution for the SVP. Here, the information processing device 10 defines the SVP function as in Equation (1) when an n-dimensional integer vector "$b_1,..., b_n$" is given, but the reason for dividing is to achieve $(x_1,..., x_n) \neq (0,..., 0)$.

$$f(x_{1,...,}x_n) = \|x_1\mathbf{b}_1 + \cdots + x_n\mathbf{b}_n\|^2$$

... Equation (1)

where $(x_1, ..., x_n) \neq (0, ..., 0)$ and each variable takes an integer value.

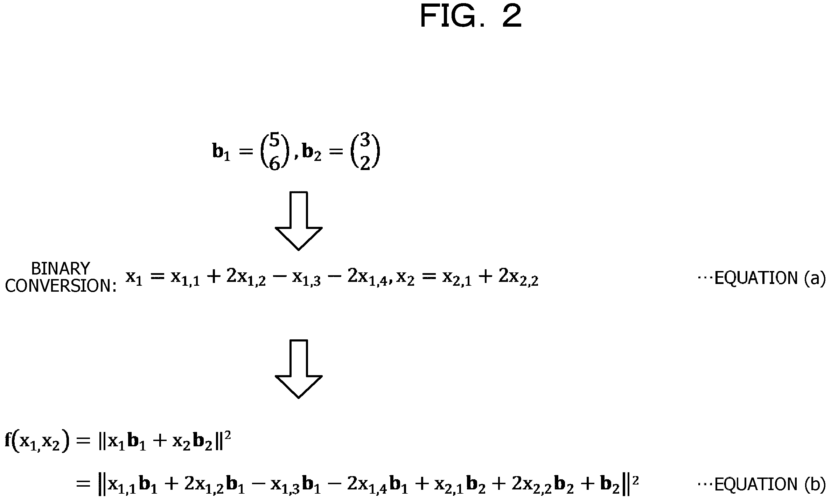

Here, the single-spin flip and the multi-spin flip used in the annealing calculation will be described. FIG. 2 is a diagram describing a Hamiltonian of the single-spin flip. In FIG. 2, a basic Hamiltonian generation method in which an integer variable is converted into a binary variable is used for explanation. As illustrated in FIG. 2, a vector $b_1$ and a vector $b_2$ generate the Hamiltonian of the range 2 illustrated in FIG. 1. That is, the Hamiltonian described in equation (b) can be generated for "$x_1$" and "$x_2$" converted into the binary expressed in equation (a).

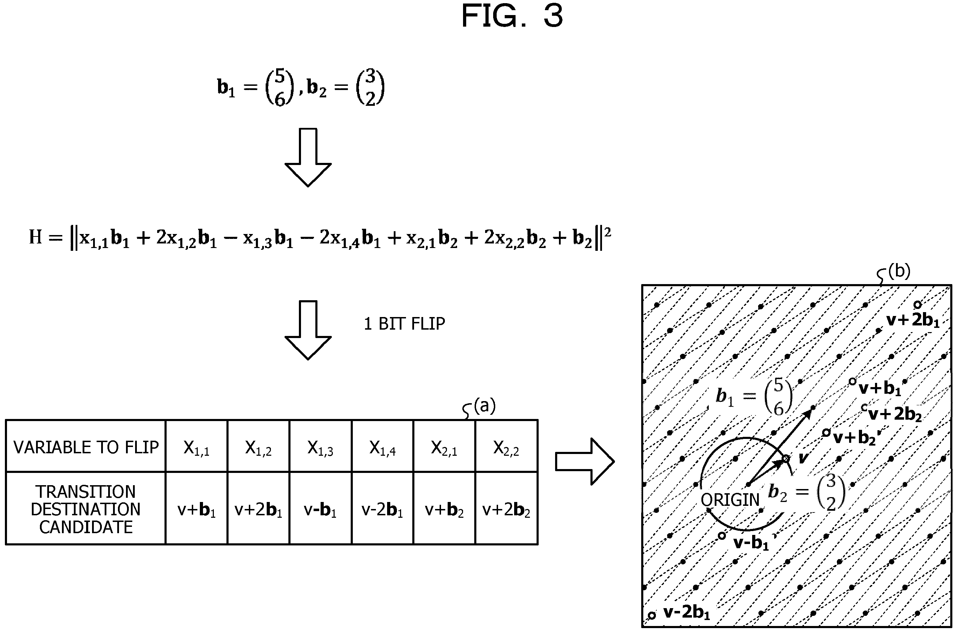

Next, the annealing calculation of the single-spin flip using this Hamiltonian will be described. FIG. 3 is a diagram describing a problem in the annealing calculation of the single-spin flip. As illustrated in FIG. 3, it is assumed that the Hamiltonian H is generated by using the vectors $b_1$ and $b_2$ as in FIG. 2. Note that when being assumed as zero, each of the variables ($x_{1,1}$, $x_{1,2}$, $x_{1,3}$, $x_{1,4}$, $x_{2,1}$, and $x_{2,2}$) in H represents the point of $v = b_2$.

In such a state, a destination where each variable is flipped by 1 bit is illustrated in Table (a) of FIG. 3, and a transition destination is illustrated in (b) of FIG. 3. For example, a transition destination candidate when "$x_{1,1}$" is flipped by 1 bit is "$v + b_1$", a transition destination candidate when "$x_{1,2}$" is flipped by 1 bit is "$v + 2b_1$", and a transition destination

3

candidate when "$x_{1,3}$" is flipped by 1 bit is "v - $b_1$". Similarly, a transition destination candidate when "$x_{1,4}$" is flipped by 1 bit is "v - $2b_1$", a transition destination candidate when "$x_{2,1}$" is flipped by 1 bit is "v + $b_2$", and a transition destination candidate when "$x_{2,3}$" is flipped by 1 bit is "v + $2b_2$". However, as illustrated in (b) of FIG. 3, these transition destinations are all longer than "v = $b_2$" (the distance from the origin is long). For example, in the single-spin flip, it is not possible to make a transition in a direction in which the Hamiltonian decreases, the solutions remain in localized solutions, and it is possible that the minimum solution cannot be calculated.

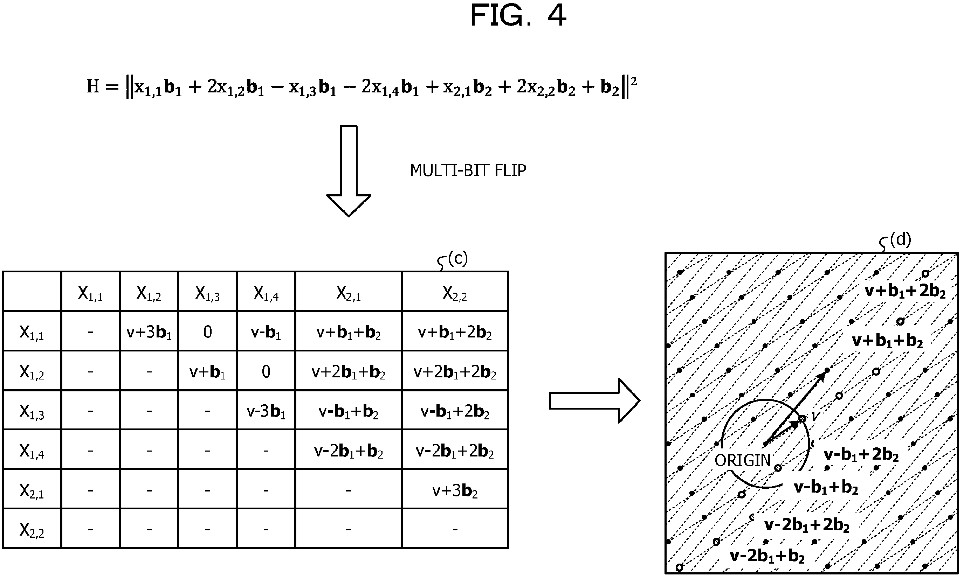

Next, the multi-spin flip will be described. FIG. 4 is a diagram describing a multi-spin flip. Here, a two-spin flip using the same Hamiltonian H will be described as an example. A destination of two spin flips of each variable is illustrated in Table (c) of FIG. 4, and a transition destination thereof is illustrated in (d) of FIG. 4. In addition to the point that transition is possible by the single-spin flip, the number of transition destinations has increased, and in particular, the linear sum of "$b_1$" and "$b_2$" that cannot be transitioned by the single-spin flip may be transitioned. Thus, the transition is possible in the direction in which the Hamiltonian decreases, particularly to the shortest vector "v - $b_1$ + $b_2$", which is an advantage over the single-spin flip. However, the annealing computer that performs multi-spin flips have not been tuned for large scale or acceleration, and has limited applications.

Therefore, in the first embodiment, a method for solving the shortest vector problem using the annealing computer of single-spin flip is achieved. For example, the information processing device 10 divides the shortest vector problem given a basis vector, which is a multidimensional integer vector, into a predetermined number of ranges. Then, the information processing device 10 generates, for each of the ranges, a specific term that causes a transition of a linear sum of the basis vectors, and generates a Hamiltonian of a pseudo-multi-spin flip in which the previous specific term is added to the Hamiltonian of the single-spin flip. For example, the information processing device 10 generates a specific term for transitioning the linear sum of a plurality of basis vectors (i.e., a specific term that causes a transition of a linear sum of specific variables among respective variables included in the basis vector).

Thereafter, the information processing device 10 outputs the Hamiltonian of each pseudo-multi-spin flip to the annealing computer 50 that performs the single-spin flip, acquires the minimum solution corresponding to each of the ranges from the annealing computer 50, and selects the minimum value among the acquired respective minimum solutions as a result of solving of the shortest vector problem. Note that when adding each specific term to each Hamiltonian corresponding to each of the ranges, the information processing device 10 adds a specific term in compliance with the restriction that the coefficient of the last basis vector of each of the ranges is 1 or more, so that the possibility of falling into localized solutions and not being able to calculate the minimum solution may be reduced.

[Functional Configuration of Information Processing Device 10]

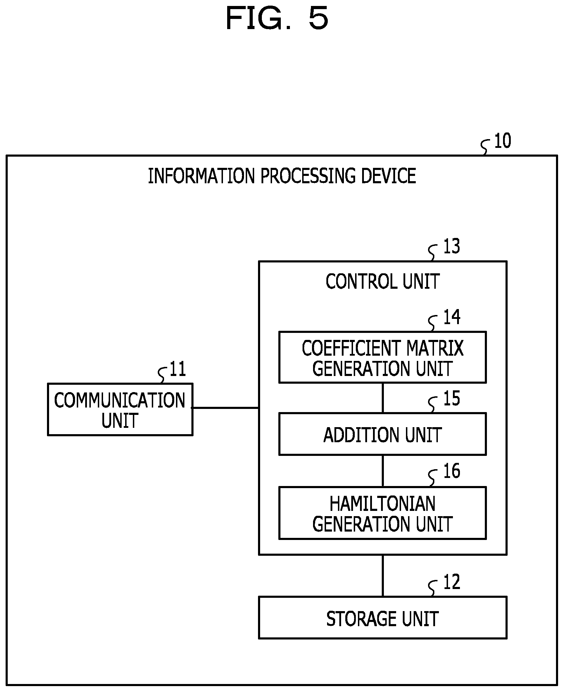

FIG. 5 is a functional block diagram illustrating a functional configuration of the information processing device 10 according to the first embodiment. As illustrated in FIG. 5, the information processing device 10 includes a communication unit 11, a storage unit 12, and a control unit 13.

The communication unit 11 is a processing unit that controls communication with another device, and is implemented by, for example, a communication interface or the like. For example, the communication unit 11 transmits and receives various types of data to and from the annealing computer 50.

The storage unit 12 is a processing unit that stores programs and various types of data, and is achieved by, for example, a memory, a hard disk, or the like. For example, the storage unit 12 stores various calculation results calculated in the process of solving the SVP.

The control unit 13 is a processing unit that is in charge of the entire information processing device 10 and is implemented by, for example, a processor or the like. The control unit 13 includes a coefficient matrix generation unit 14, an addition unit 15, and a Hamiltonian generation unit 16. Note that the coefficient matrix generation unit 14, the addition unit 15, and the Hamiltonian generation unit 16 are achieved by an electronic circuit that the processor has, a process executed by the processor, or the like.

(Generation of Coefficient Matrix)

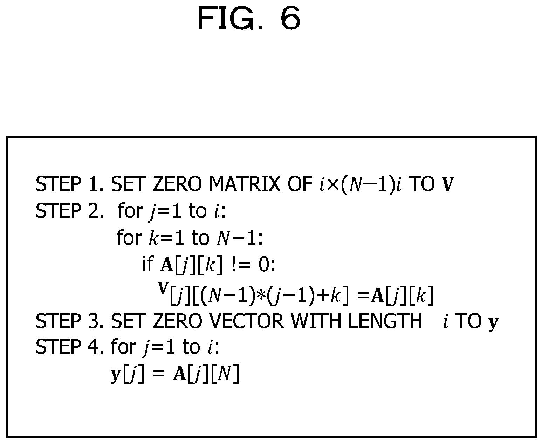

The coefficient matrix generation unit 14 is a processing unit that divides the shortest vector problem given a basis vector, which is a multidimensional integer vector, into a predetermined number of ranges, and generates, for each range, a coefficient matrix for generating a Hamiltonian. FIG. 6 is a diagram describing the generation of the coefficient matrix. As illustrated in FIG. 6, as one example, the coefficient matrix generation unit 14 generates each coefficient matrix in each range by executing step 1, step 2, step 3, and step 4.

For example, the description will be given with the basis vector B of the n-dimensional lattice being "B = ($b_1$,..., $b_n$) (n × n matrix)", an integer i ($1 \le i \le n$) representing the position, and a matrix A (i × N matrix) representing a search range. In this case, the coefficient matrix generation unit 14 "sets the zero matrix of (i × (N - 1)i) in the vector V" as step 1. Subsequently, the coefficient matrix generation unit 14 generates "V[j][(N - 1) × (j - 1) + k] = A[j][k]" repeats respective for statements for i and j illustrated in step 2. Moreover, the coefficient matrix generation unit 14 "sets a zero vector with a length i to y" in step 3. Thereafter, the coefficient matrix generation unit 14 generates "y[j] = A[j][N]" by repeating the for statement for i in step 4.

(Pseudo-Multi-Spin Flip)

The addition unit 15 is a processing unit that adds a term of pseudo-multi-spin flip to the coefficient matrix. For example, for each range, the addition unit 15 generates a specific term (term of pseudo-multi-spin flip) for transitioning a linear sum of a plurality of basis vectors, and adds a specific term to the Hamiltonian of the single-spin flip. At this time, the addition unit 15 generates and adds a specific term in compliance with restrictions described later.

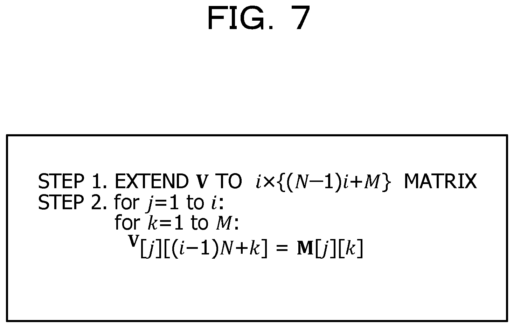

FIG. 7 is a diagram describing generation of a term of pseudo-multi-spin flip. As illustrated in FIG. 7, as one example, the addition unit 15 generates a term of multi-spin flip by executing steps 1 and 2. Here, in addition to the example described above, a matrix representing a multi-spin flip will be described as a matrix M (i $\times$ M matrix). Explaining with the example described above, the addition unit 15 "extends the vector V to the i $\times$ {(N - 1)i + M} matrix" in step 1. Subsequently, the addition unit 15 generates "V[j][(i - 1)N + k] = M[j][k]" by repeating the for statements for j and k in step 2.

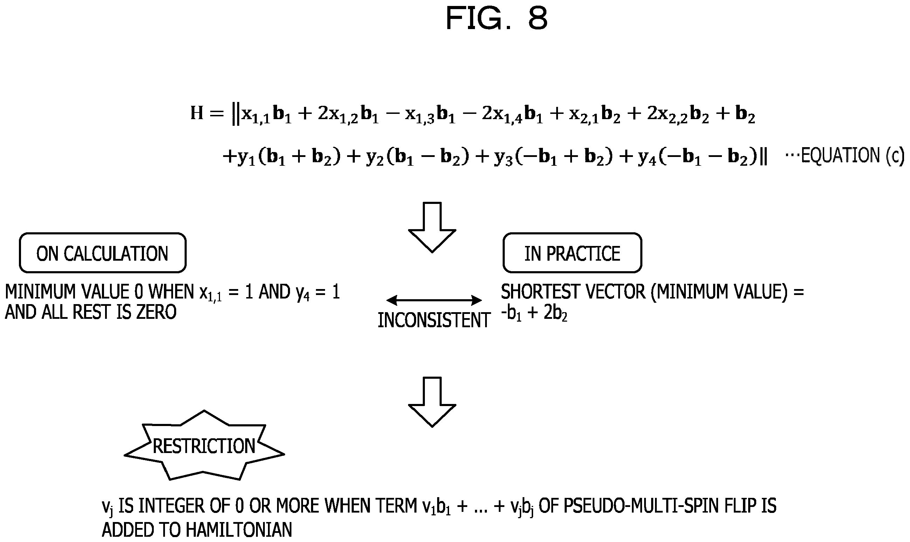

Here, the restrictions of the pseudo-multi-spin flip term will be described. FIG. 8 is a diagram describing the restrictions of the pseudo-multi-spin flip term in a range j. For example, as the restrictions, it is assumed that (1) coefficients of the basis vectors $b_1$,..., $b_{j-1}$ can be freely selected from all integers, while (2) coefficients of the basis vector $b_j$ are integers of 1 or more. For example, there is no restriction in a positive direction, but a restriction of "1 or more" is set in a negative direction. If this restriction is not met, the minimum value of the Hamiltonian will be different from one desired to be calculated.

For example, as illustrated in FIG. 8, it is assumed that the Hamiltonian H described in equation (c) is generated by adding four "$\pm b_1 \pm b_2$" (in no particular order) to the Hamiltonian in the range 2 of FIG. 1. As illustrated in (d) of FIG. 4, the calculated minimum value on calculation desired to be calculated is "$-b_1 + 2b_2$" representing the shortest vector. On the other hand, this Hamiltonian H takes the minimum value 0 when "$x_{1,1} = 1$, $y_4 = 1$" and all the rest are zero, and thus this is calculated in the annealing calculation. That is, it is not possible to correctly calculate the shortest vector. This is because the appropriate addition of the pseudo-multi-spin flip violates the restriction that the coefficient of $b_2$ is 1 or more.

Therefore, in a case of the Hamiltonian in the range j, in order to add the term of the pseudo-multi-spin flip in a range that does not extend the coefficient of $b_j$ in the negative direction, "when adding the term ($v_1 b_1 +... + v_j b_j$) of the pseudo-multi-spin flip in the Hamiltonian, "$v_j$" is an integer equal to or more than zero" is provided as a restriction.

(Selection of Matrix M Representing Pseudo-Multi-Spin Flip)

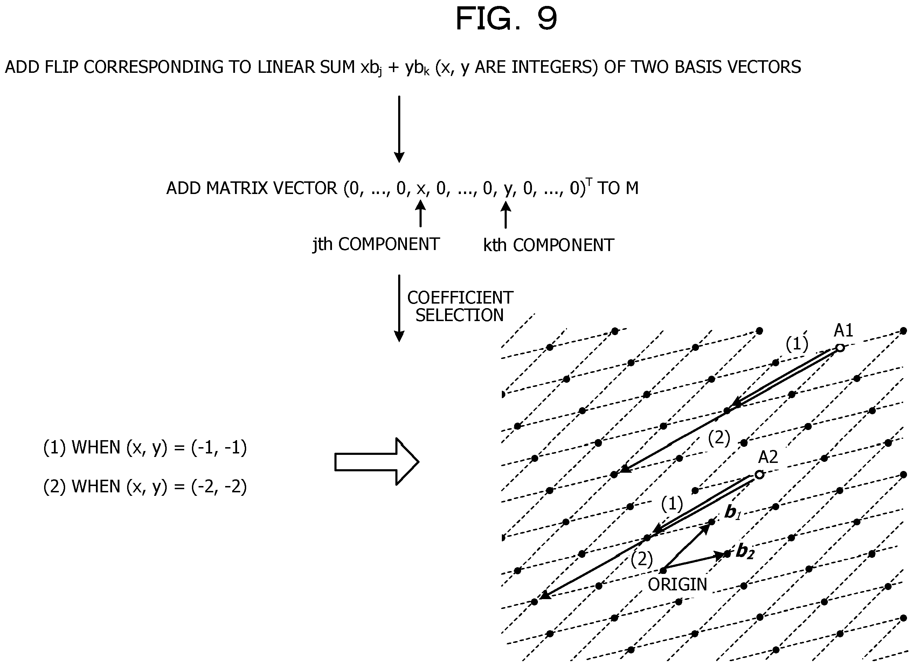

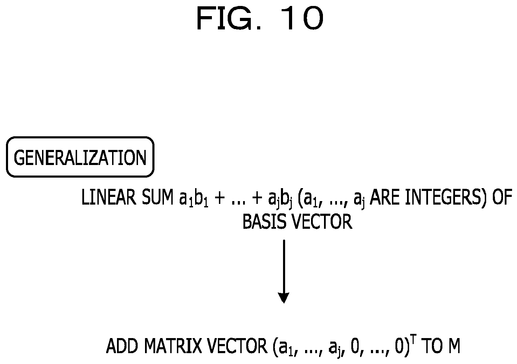

Next, a method of selecting the matrix M representing the pseudo-multi-spin flip described above will be described. FIG. 9 and 10 are diagrams describing M that achieves a pseudo-multi-spin flip. Here, M that achieves a pseudo-2-spin flip will be described as an example. As illustrated in FIG. 9, to add a flip corresponding to the linear sum "$xb_j + yb_k$" (x and y are integers) of the two basis vectors, it is only required to add a transposed matrix of a column vector (0,..., 0, x, 0,..., 0, y, 0,..., 0) to M. For example, adding one will increase the Hamiltonian variable by one. Note that x is a jth component and y is a kth component.

As a method of setting the coefficients x and y at this time, if the absolute values of x and y are set to be small, the movement will be a small transition at the time of flipping, and if the absolute values of x and y are set to be large, the movement will be a large transition at the time of flipping, and which one to use can be set in any manner depending on the situation of the annealing calculation. For example, at point A, the transition destination is closer to the origin when flipped at (x, y) = (-2, -2) than when flipped at (x, y) = (1, 1). Conversely, at point B, the transition destination is closer to the origin when flipped at (x, y) = (1, 1) than when flipped at (x, y) = (-2, -2).

Moreover, a plurality of the same column vectors can be added. For example, the transitions of "$xb_j + yb_k$" are possible by the added number.

A generalization of the above contents is illustrated in FIG. 10 As illustrated in FIG. 10, in order to achieve the pseudo-multi-spin flip, the transposed matrix of a column vector ($a_1$,..., $a_j$, 0,..., 0) corresponding to a linear sum "$a_1 b_1 +... + a_j b_j$" ($a_1$,..., $a_j$ is an integer) of any number of basis vectors is only required to be added to M. As described in FIG. 9, the coefficient at this time is set in any manner depending on the situation of the annealing calculation.

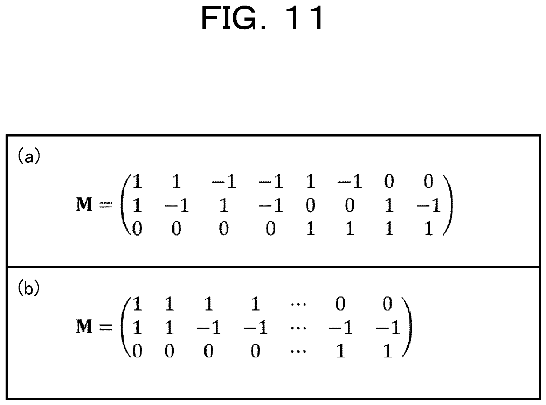

Here, a specific example of the matrix M representing the pseudo-multi-spin flip described above will be described. FIG. 11 is a diagram describing an example of selection of M that achieves the pseudo-multi-spin flip. For example, when the addition unit 15 adds the term "$xb_j + yb_k$" one by one to the Hamiltonian in the range i for any "$1 \leq j < k \leq i$", the addition unit 15 may generate the matrix M described in (a) in FIG. 11. However, it is assumed that when x, y = 1, -1 and k = i, then x = 1, -1 and y = 1, and (a) in FIG. 11 is an example when n = 3, i = 3. Note that, in (a) of FIG. 11, x, y = -2, -1, 1, 2 (where y = 1, 2 when k = i) may be set.

Furthermore, the variables to be added may be two or more instead of one by one. For example, taking the case of n = 3 and i = 3, the matrix M can be generated as illustrated in (b) of FIG. 11. Consequently, for example, it is possible to perform the transition of "$b_1 + b_2$" two consecutive times.

(Generation of Hamiltonian)

Returning to FIG. 5, the Hamiltonian generation unit 16 is a processing unit that generates, for each of the ranges, the Hamiltonian of the pseudo-multi-spin flip in which a specific term (term of pseudo-multi-spin flip) generated by the addition unit 15 is added to the Hamiltonian of the single-spin flip. For example, the Hamiltonian generation unit 16 generates a Hamiltonian from the coefficient matrix.

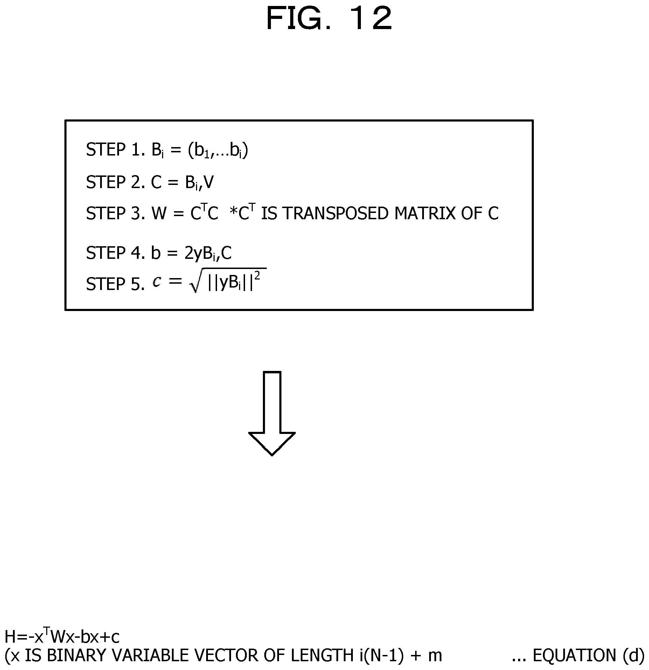

FIG. 12 is a diagram describing generation of the Hamiltonian. As illustrated in FIG. 12, the Hamiltonian generation unit 16 generates a Hamiltonian by executing steps 1 to 5 to add a term for executing the multi-spin flip in a pseudo manner to the Hamiltonian of the SVP. For example, the Hamiltonian generation unit 16 generates a vector "$B_i = (b_1,..., b_i)$" in step 1, and generates "$C = B_i V$" that multiplies the "V" and "$B_i$" generated by the addition unit 15 in step 2.

Next, the Hamiltonian generation unit 16 generates "W" by multiplying "C" in step 2 and "transposed matrix of C" in step 3, defines a vector b in step 4, and defines a variable c in step 5. Consequently, the Hamiltonian generation unit 16 may define the Hamiltonian H described in equation (d) of FIG. 12 as the Hamiltonian H in the range i. Note that x in equation (d) is a binary variable vector with a length "$i(N-1)+m$". However, m is the number of columns in the matrix M.

Thereafter, the Hamiltonian generation unit 16 transmits the Hamiltonian H in each range to the annealing computer 50 to instruct solving of the SVP. Then, the Hamiltonian generation unit 16 acquires the minimum solution of each range from the annealing computer 50, and performs storage in the storage unit 12, display on a display or the like, and/or transmission to an administrator terminal of the minimum solution, which is the minimum value thereof, as the final solution.

[Flow of Processing]

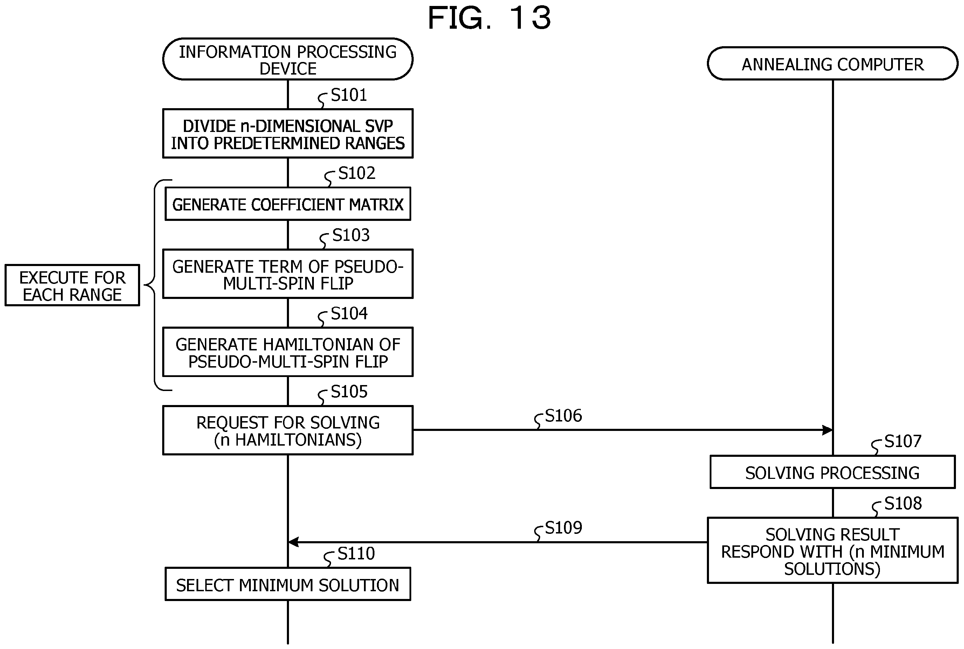

FIG. 13 is a sequence diagram illustrating a flow of processing of solving the shortest vector problem. As illustrated in FIG. 13, the information processing device 10 divides the n-dimensional SVP into predetermined ranges (S101), and executes S102 to S104 for each divided range.

For example, the information processing device 10 generates a coefficient matrix A representing the search range (S102), generates a matrix M (additional target term) representing the pseudo-multi-spin flip using the coefficient matrix A (S103), and generates the Hamiltonian H to which the term M of the pseudo-multi-spin flip is added (S104).

Thereafter, the information processing device 10 transmits a request for solving including n Hamiltonians corresponding to each range to the annealing computer 50 (S105 and S106). Then, the annealing computer 50 executes the processing of solving each Hamiltonian (S107), and responds to the information processing device 10 with results of solving, which are the n minimum solutions (S108 and S109).

Then, the information processing device 10 selects the minimum solution out of the acquired n minimum solutions as the minimum solution of the shortest vector problem (S110).

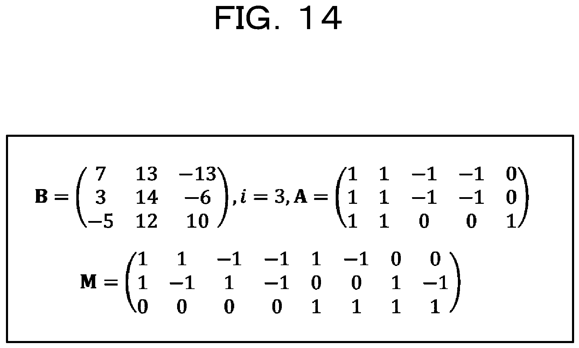

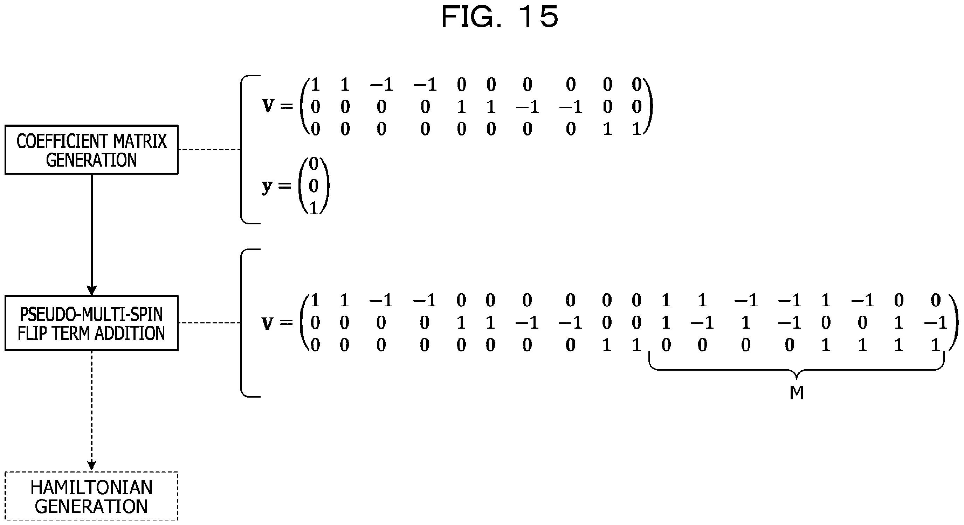

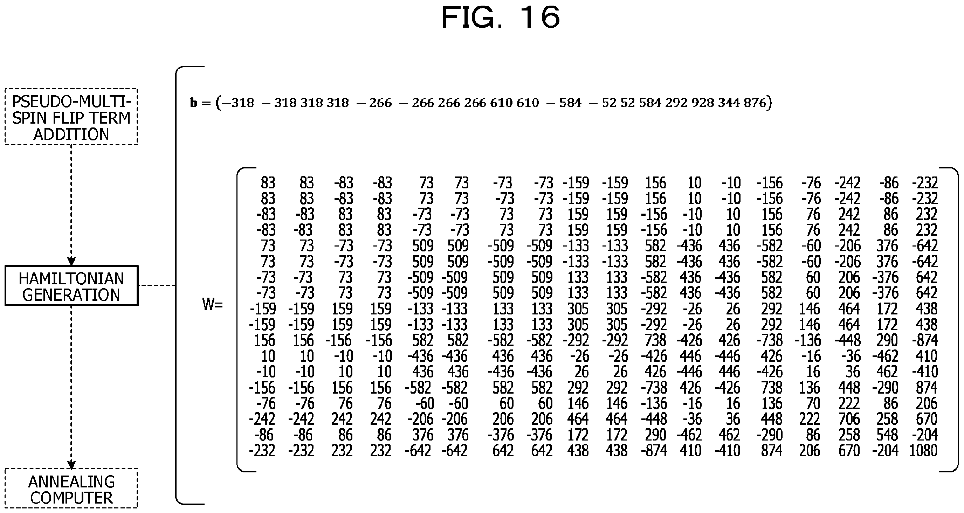

Here, a specific example of the processing described above will be described with reference to FIGs. 14 to 16. FIG. 14 is a diagram describing a specific problem setting. FIGs. 15 and 16 are diagrams describing examples of solving a specific problem. As illustrated in FIG. 14, it is assumed that the basis vector B is a matrix of 3 rows and 3 columns, i = 3, and the matrix A representing the search range is a matrix of 5 rows and 3 columns, and the M illustrated in (a) of FIG. 11 described above is used as M that achieves the pseudo-multi-spin flip.

In this state, as illustrated in FIG. 15, the information processing device 10 uses the i = 3 and the matrix A representing the search range, which are illustrated in FIG. 14, and generates the vector V and y according to steps 1 to 4 illustrated in FIG. 6. Moreover, the information processing device 10 generates a Hamiltonian in which the M that achieves the pseudo-multi-spin flip illustrated in FIG. 14 is added to the vector V generated by steps 1 and 2 illustrated in FIG. 7.

Thereafter, the information processing device 10 calculates the matrix W, the vector b, and the variable c using the basis vector B and the vector V according to steps 1 to 5 illustrated in FIG. 12. Then, the information processing device 10 uses these W, b, and c to generate a Hamiltonian.

[Effects]

As described above, the information processing device 10 uses the fact that there is no maximum value or minimum value in the restriction condition of the shortest vector problem, and generates a Hamiltonian to which "a term that shifts only a certain linear sum in the "basis vectors $b_1,... b_n$"" is added within the range of the restriction conditions of the shortest vector problem. Thus, the information processing device 10 may substantially achieve transitions for a plurality of variables with the annealing computer 50 of single-spin flip.

Therefore, the information processing device 10 may generate a Hamiltonian that can solve a larger shortest vector problem at higher speed by using the annealing computer 50 of single-spin flip, and may efficiently solve the shortest vector problem.

Here, an experimental example using the shortest vector problem of a 40-dimensional lattice will be described. For example, a 40-dimensional lattice with seed = 0 of SVP Challenge is generated, and LLL-0.99 is performed. Furthermore, for "i = 31,..., 40", ten Hamiltonians were generated for each of the general single-spin flip and the method according to the first embodiment, and were solved by the annealing computer for single-spin flip. However, as a condition of M, "a total of four column vectors are generated in which the jth component is 1 or -1, the kth component is 1 or -1, and others are zero for any $1 \leq j < k \leq i$ (however, when k = i, there are two kth components of 1) and adds the column vectors to the last column of M", and consequently, M becomes a "$i \times 2 (i - 1)^2$" matrix.

In such a state, the total times taken to calculate the minimum solutions for the ten Hamiltonians were compared. While it takes 687 seconds to solve when using the Hamiltonian of general single-spin flip, by using the method of the first embodiment, it was possible to shorten the time to 13.8 seconds, and thus it was possible to achieve acceleration of about 50 times.

[Second Embodiment]

Now, while the embodiments have been described above, the embodiments may be carried out in a variety of different modes in addition to the above-described embodiments.

[Numerical Values And the Like]

The numerical examples, matrices, various types of variables, and the like used in the embodiment described above are merely examples and may be changed in any manner. Furthermore, the flow of the processing described in the sequence diagram may be appropriately changed within a consistent range.

[Introduction of approximation processing]

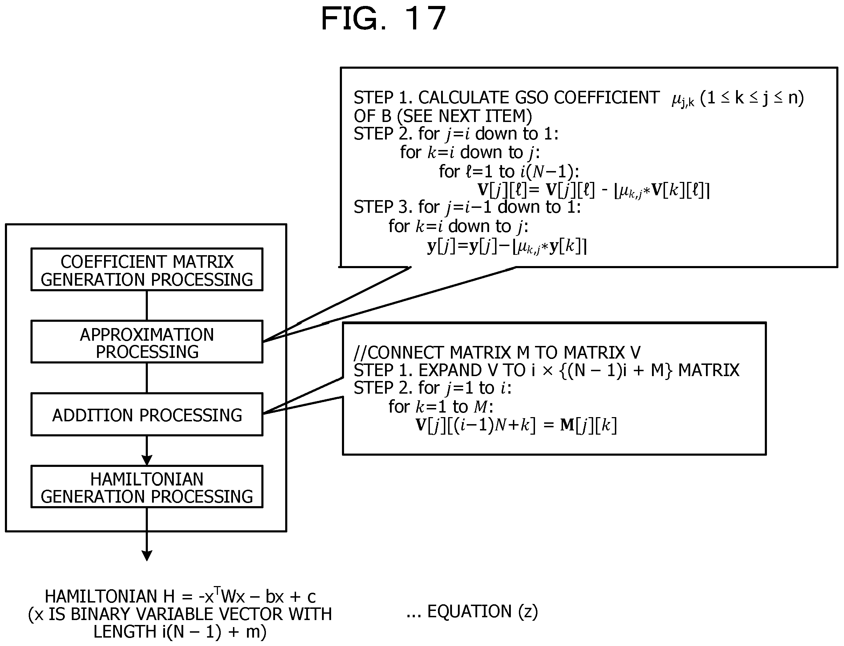

As a modification example of the first embodiment described above, it is possible to introduce approximation processing (approximate enumeration) using an enumeration type that can combine a plurality of constants. FIG. 17 is a diagram describing another example of the pseudo-multi-spin flip term. As illustrated in FIG. 17, the coefficient matrix generation unit 14 of the information processing device 10 generates a coefficient matrix in each range by a method similar to that in the first embodiment.

Next, unlike the first embodiment, the addition unit 15 executes approximation processing. For example, the addition unit 15 calculates a GSO coefficient $\mu_{j,k}$ ($1 \leq k \leq j \leq n$) of the basis vector B in step 1. Subsequently, the addition unit 15 generates "y[j] = y[j] - [$\mu_{j,k} \times$ y[k]]" by repeating the for statements of j, i, and l in step 2, and repeats the for statements of j and k in step 3.

Thereafter, the addition unit 15 connects the matrix M to the matrix V. For example, the addition unit 15 "extends the vector V to an i $\times$ {(N-1)i + M} matrix" in step 1. Subsequently, the addition unit 15 generates "V[j][(i - 1)N + k] = M[j][k]" by repeating the for statements for j and k in step 2.

Then, the Hamiltonian generation unit 16 generates equation (z) as the Hamiltonian H in which a term for executing a pseudo-multi-spin flip is added to the Hamiltonian of the SVP by the same method as in the first embodiment. Note that x in equation (z) is a binary variable with a length "i(N - 1) + m".

In this manner, the information processing device 10 may generate a Hamiltonian into which the approximation processing is introduced, and may improve versatility and accelerate processing.

[System]

Pieces of information including a processing procedure, a control procedure, a specific name, various types of data, and parameters described above or illustrated in the drawings may be changed in any manner unless otherwise specified.

Furthermore, each component of each device illustrated in the drawings is functionally conceptual and does not necessarily have to be physically configured as illustrated in the drawings. For example, specific forms of distribution and integration of each device are not limited to those illustrated in the drawings. That is, all or a part thereof may be configured by being functionally or physically distributed or integrated in any units according to various types of loads, usage situations, or the like.

Moreover, all or any part of individual processing functions performed in each device may be implemented by a central processing unit (CPU) and a program analyzed and executed by the CPU, or may be implemented as hardware by wired logic.

[Hardware]

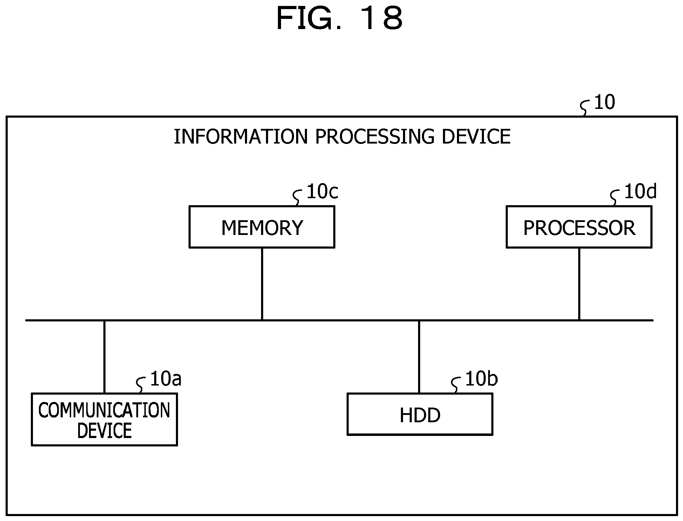

FIG. 18 is a diagram describing a hardware configuration example. As illustrated in FIG. 18, the information processing device 10 includes a communication device 10a, a hard disk drive (HDD) 10b, a memory 10c, and a processor 10d. Furthermore, each of the units illustrated in FIG. 18 is mutually connected by a bus or the like.

The communication device 10a is a network interface card or the like and communicates with another device. The HDD 10b stores a program that causes the functions illustrated in FIG. 5, and a DB to operate.

The processor 10d reads a program that executes processing similar to the processing of each processing unit illustrated in FIG. 5 from the HDD 10b or the like, and develops the read program in the memory 10c, thereby operating a process that executes each function described with reference to FIG. 5 and the like. For example, this process executes a function similar to the function of each processing unit included in the information processing device 10. For example, the processor 10d reads a program having similar functions to those of the coefficient matrix generation unit 14, the addition unit 15, the Hamiltonian generation unit 16, and the like from the HDD 10b and the like. Then, the processor 10d executes a process of executing similar processing to that of the coefficient matrix generation unit 14, the addition unit 15, the Hamiltonian generation unit 16, and the like.

As described above, the information processing device 10 operates as an information processing device that executes an analysis method by reading and executing a program. Furthermore, the information processing device 10 may also implement functions similar to the functions of the above-described embodiments by reading the program described above from a recording medium by a medium reading device and executing the read program described above. Note that the program referred to in other embodiments is not limited to being executed by the information processing device 10. For example, the embodiments may be similarly applied to a case where another computer or server executes the program, or a case where these cooperatively execute the program.

This program may be distributed via a network such as the Internet. Furthermore, this program may be recorded in a computer-readable recording medium such as a hard disk, flexible disk (FD), compact disc read only memory (CD-ROM), magneto-optical disk (MO), or digital versatile disc (DVD), and may be executed by being read from the recording medium by a computer.

In any of the above aspects, the various features may be implemented in hardware, or as software modules running on one or more processors/computers.

The invention provides a computer program or a computer program product comprising instructions which, when executed by a computer, cause the computer to carry out any of the methods/method steps described herein, and a (non-transitory) computer-readable medium comprising instructions which, when executed by a computer, cause the computer to carry out any of the methods/method steps described herein. A computer program embodying the invention may be stored on a (non-transitory) computer-readable medium, or it could, for example, be in the form of a signal such as a downloadable data signal provided from an Internet website, or it could be in any other form.

**Claims**

1. An information processing program comprising instructions which, when the program is executed by a computer, cause the computer to perform processing, the computer being configured to solve a shortest vector problem using an annealing computer that performs a single-spin flip, the processing comprising:

   dividing the shortest vector problem including a basis vector into a predetermined number of ranges, the basis vector being a multidimensional integer vector;
   generating, for each of the predetermined number of ranges, a specific term that causes a transition of a linear sum of specific variables among respective variables included in the basis vector; and
   generating, for each of the predetermined number of ranges, a Hamiltonian of a pseudo-multi-spin flip in which the specific term is added to the Hamiltonian of the single-spin flip.

2. The information processing program according to claim 1, wherein the generating of the Hamiltonian includes:

   adding, in response to adding of each specific term to each Hamiltonian that corresponds to each of the predetermined number of ranges, the specific term in compliance with a restriction that the coefficient of a last basis vector of each of the predetermined number of ranges is 1 or more; and
   generating a Hamiltonian of each pseudo-multi-spin flip that corresponds to each of the predetermined number of ranges.

3. The information processing program according to claim 1 or 2, the processing further comprising:

outputting the Hamiltonian of each pseudo-multi-spin flip that corresponds to each of the predetermined number of ranges to the annealing computer that performs the single-spin flip;
acquiring a minimum solution that corresponds to each of the predetermined number of ranges from the annealing computer; and
selecting a minimum value among the acquired respective minimum solutions as a result of the solving of the shortest vector problem.

4. A computer-implemented method of solving of a shortest vector problem using an annealing computer that performs a single-spin flip, the method comprising:

dividing the shortest vector problem including a basis vector into a predetermined number of ranges, the basis vector being a multidimensional integer vector;
generating, for each of the predetermined number of ranges, a specific term that causes a transition of a linear sum of specific variables among respective variables included in the basis vector; and
generating, for each of the predetermined number of ranges, a Hamiltonian of a pseudo-multi-spin flip in which the specific term is added to the Hamiltonian of the single-spin flip.

5. An information processing device that executes solving of a shortest vector problem using an annealing computer that performs a single-spin flip, the information processing device comprising:

a dividing unit that divides the shortest vector problem including a basis vector into a predetermined number of ranges, the basis vector being a multidimensional integer vector; and
a generation unit that

generates, for each of the predetermined number of ranges, a specific term that causes a transition of a linear sum of specific variables among respective variables included in the basis vector, and
generates, for each of the predetermined number of ranges, a Hamiltonian of a pseudo-multi-spin flip in which the specific term is added to the Hamiltonian of the single-spin flip.

6. A computer-readable storage medium having the information processing program of any of claims 1 to 3 stored thereon.

# FIG. 1

INFORMATION PROCESSING DEVICE $\quad$ 10

n-DIMENSIONAL SVP

RANGE 1

$$\min_{x_1 \geq 1} \|x_1 \mathbf{b}_1\|^2$$

RANGE $j$

$$\min_{\substack{x_1,\dots,x_{j-1} \in \mathbb{Z} \\ x_j \geq 1}} \|x_1 \mathbf{b}_1 + \cdots + x_j \mathbf{b}_j\|^2$$

RANGE n

$$\min_{\substack{x_1,\dots,x_{n-1} \in \mathbb{Z} \\ x_n \geq 1}} \|x_1 \mathbf{b}_1 + \cdots + x_n \mathbf{b}_n\|^2$$

CONVERSION INTO HAMILTONIAN

ANNEALING COMPUTER $\quad$ 50

n MINIMUM SOLUTIONS

GENERATE COEFFICIENT MATRIX

GENERATE TERM OF PSEUDO-MULTI-SPIN FLIP

GENERATE HAMILTONIAN

RESTRICTION CONDITION

EP 4 050 472 A1

# FIG. 2

$$\mathbf{b}_1 = \begin{pmatrix} 5 \\ 6 \end{pmatrix}, \mathbf{b}_2 = \begin{pmatrix} 3 \\ 2 \end{pmatrix}$$

⇩

BINARY CONVERSION: $x_1 = x_{1,1} + 2x_{1,2} - x_{1,3} - 2x_{1,4}, x_2 = x_{2,1} + 2x_{2,2}$ ⋯EQUATION (a)

⇩

$$f(x_1, x_2) = \|x_1 \mathbf{b}_1 + x_2 \mathbf{b}_2\|^2$$

$$= \|x_{1,1}\mathbf{b}_1 + 2x_{1,2}\mathbf{b}_1 - x_{1,3}\mathbf{b}_1 - 2x_{1,4}\mathbf{b}_1 + x_{2,1}\mathbf{b}_2 + 2x_{2,2}\mathbf{b}_2 + \mathbf{b}_2\|^2 \quad \cdots \text{EQUATION (b)}$$

# FIG. 3

$$\mathbf{b}_1 = \begin{pmatrix} 5 \\ 6 \end{pmatrix}, \mathbf{b}_2 = \begin{pmatrix} 3 \\ 2 \end{pmatrix}$$

$$\Downarrow$$

$$H = \left\| x_{1,1}\mathbf{b}_1 + 2x_{1,2}\mathbf{b}_1 - x_{1,3}\mathbf{b}_1 - 2x_{1,4}\mathbf{b}_1 + x_{2,1}\mathbf{b}_2 + 2x_{2,2}\mathbf{b}_2 + \mathbf{b}_2 \right\|^2$$

$$\Downarrow \quad \text{1 BIT FLIP}$$

(a)

| VARIABLE TO FLIP | $X_{1,1}$ | $X_{1,2}$ | $X_{1,3}$ | $X_{1,4}$ | $X_{2,1}$ | $X_{2,2}$ |
|---|---|---|---|---|---|---|
| TRANSITION DESTINATION CANDIDATE | v+$\mathbf{b}_1$ | v+2$\mathbf{b}_1$ | v-$\mathbf{b}_1$ | v-2$\mathbf{b}_1$ | v+$\mathbf{b}_2$ | v+2$\mathbf{b}_2$ |

(b)

$b_1 = \begin{pmatrix} 5 \\ 6 \end{pmatrix}$

$b_2 = \begin{pmatrix} 3 \\ 2 \end{pmatrix}$

v+2$\mathbf{b}_1$, v+$\mathbf{b}_1$, v+2$\mathbf{b}_2$, v+$\mathbf{b}_2$, v, ORIGIN, v-$\mathbf{b}_1$, v-2$\mathbf{b}_1$

EP 4 050 472 A1

# FIG. 4

$$H = \left\| x_{1,1}\mathbf{b}_1 + 2x_{1,2}\mathbf{b}_1 - x_{1,3}\mathbf{b}_1 - 2x_{1,4}\mathbf{b}_1 + x_{2,1}\mathbf{b}_2 + 2x_{2,2}\mathbf{b}_2 + \mathbf{b}_2 \right\|^2$$

MULTI-BIT FLIP

(c)

|  | $X_{1,1}$ | $X_{1,2}$ | $X_{1,3}$ | $X_{1,4}$ | $X_{2,1}$ | $X_{2,2}$ |
|---|---|---|---|---|---|---|
| $X_{1,1}$ | - | $v+3\mathbf{b}_1$ | 0 | $v-\mathbf{b}_1$ | $v+\mathbf{b}_1+\mathbf{b}_2$ | $v+\mathbf{b}_1+2\mathbf{b}_2$ |
| $X_{1,2}$ | - | - | $v+\mathbf{b}_1$ | 0 | $v+2\mathbf{b}_1+\mathbf{b}_2$ | $v+2\mathbf{b}_1+2\mathbf{b}_2$ |
| $X_{1,3}$ | - | - | - | $v-3\mathbf{b}_1$ | $v-\mathbf{b}_1+\mathbf{b}_2$ | $v-\mathbf{b}_1+2\mathbf{b}_2$ |
| $X_{1,4}$ | - | - | - | - | $v-2\mathbf{b}_1+\mathbf{b}_2$ | $v-2\mathbf{b}_1+2\mathbf{b}_2$ |
| $X_{2,1}$ | - | - | - | - | - | $v+3\mathbf{b}_2$ |
| $X_{2,2}$ | - | - | - | - | - | - |

(d)

# FIG. 5

INFORMATION PROCESSING DEVICE 10

CONTROL UNIT 13

COEFFICIENT MATRIX GENERATION UNIT 14

COMMUNICATION UNIT 11

ADDITION UNIT 15

HAMILTONIAN GENERATION UNIT 16

STORAGE UNIT 12

# FIG. 6

STEP 1. SET ZERO MATRIX OF $i \times (N-1)i$ TO **V**
STEP 2. for $j=1$ to $i$:
      for $k=1$ to $N-1$:
        if $\mathbf{A}[j][k]$ != 0:
          $\mathbf{V}[j][(N-1)*(j-1)+k] = \mathbf{A}[j][k]$
STEP 3. SET ZERO VECTOR WITH LENGTH $i$ TO **y**
STEP 4. for $j=1$ to $i$:
      $\mathbf{y}[j] = \mathbf{A}[j][N]$

# FIG. 7

STEP 1. EXTEND **V** TO $i \times \{(N-1)i+M\}$ MATRIX
STEP 2. for $j$=1 to $i$:
      for $k$=1 to $M$:
        $\mathbf{V}[j][(i-1)N+k] = \mathbf{M}[j][k]$

# FIG. 8

$$H = \|x_{1,1}\mathbf{b}_1 + 2x_{1,2}\mathbf{b}_1 - x_{1,3}\mathbf{b}_1 - 2x_{1,4}\mathbf{b}_1 + x_{2,1}\mathbf{b}_2 + 2x_{2,2}\mathbf{b}_2 + \mathbf{b}_2$$

$$+y_1(\mathbf{b}_1 + \mathbf{b}_2) + y_2(\mathbf{b}_1 - \mathbf{b}_2) + y_3(-\mathbf{b}_1 + \mathbf{b}_2) + y_4(-\mathbf{b}_1 - \mathbf{b}_2)\| \quad \cdots \text{EQUATION (c)}$$

ON CALCULATION

MINIMUM VALUE 0 WHEN $x_{1,1} = 1$ AND $y_4 = 1$ AND ALL REST IS ZERO

INCONSISTENT

IN PRACTICE

SHORTEST VECTOR (MINIMUM VALUE) = $-b_1 + 2b_2$

RESTRICTION

$v_j$ IS INTEGER OF 0 OR MORE WHEN TERM $v_1b_1 + \ldots + v_jb_j$ OF PSEUDO-MULTI-SPIN FLIP IS ADDED TO HAMILTONIAN

EP 4 050 472 A1

# FIG. 9

ADD FLIP CORRESPONDING TO LINEAR SUM $xb_j + yb_k$ (x, y ARE INTEGERS) OF TWO BASIS VECTORS

ADD MATRIX VECTOR $(0, ..., 0, x, 0, ..., 0, y, 0, ..., 0)^\top$ TO M

jth COMPONENT     kth COMPONENT

COEFFICIENT SELECTION

(1) WHEN (x, y) = (-1, -1)

(2) WHEN (x, y) = (-2, -2)

EP 4 050 472 A1

# FIG. 10

GENERALIZATION

LINEAR SUM $a_1b_1 + ... + a_jb_j$ ($a_1, ..., a_j$ ARE INTEGERS) OF BASIS VECTOR

$\downarrow$

ADD MATRIX VECTOR $(a_1, ..., a_j, 0, ..., 0)^\top$ TO M

# FIG. 11

(a)

$$\mathbf{M} = \begin{pmatrix} 1 & 1 & -1 & -1 & 1 & -1 & 0 & 0 \\ 1 & -1 & 1 & -1 & 0 & 0 & 1 & -1 \\ 0 & 0 & 0 & 0 & 1 & 1 & 1 & 1 \end{pmatrix}$$

(b)

$$\mathbf{M} = \begin{pmatrix} 1 & 1 & 1 & 1 & \cdots & 0 & 0 \\ 1 & 1 & -1 & -1 & \cdots & -1 & -1 \\ 0 & 0 & 0 & 0 & \cdots & 1 & 1 \end{pmatrix}$$

# FIG. 12

STEP 1. $B_i = (b_1, \ldots b_i)$

STEP 2. $C = B_i, V$

STEP 3. $W = C^T C$ $*C^T$ IS TRANSPOSED MATRIX OF C

STEP 4. $b = 2y B_i, C$

STEP 5. $c = \sqrt{||yB_i||^2}$

$H = -x^T W x - bx + c$

(x IS BINARY VARIABLE VECTOR OF LENGTH i(N-1) + m $\qquad$ ... EQUATION (d)

# FIG. 13

INFORMATION PROCESSING DEVICE

ANNEALING COMPUTER

S101
DIVIDE n-DIMENSIONAL SVP INTO PREDETERMINED RANGES

S102
GENERATE COEFFICIENT MATRIX

S103
GENERATE TERM OF PSEUDO-MULTI-SPIN FLIP

EXECUTE FOR EACH RANGE

S104
GENERATE HAMILTONIAN OF PSEUDO-MULTI-SPIN FLIP

S105
REQUEST FOR SOLVING (n HAMILTONIANS)

S106

S107
SOLVING PROCESSING

S108

S109
SOLVING RESULT RESPOND WITH (n MINIMUM SOLUTIONS)

S110
SELECT MINIMUM SOLUTION

EP 4 050 472 A1

# FIG. 14

$$\mathbf{B} = \begin{pmatrix} 7 & 13 & -13 \\ 3 & 14 & -6 \\ -5 & 12 & 10 \end{pmatrix}, i = 3, \mathbf{A} = \begin{pmatrix} 1 & 1 & -1 & -1 & 0 \\ 1 & 1 & -1 & -1 & 0 \\ 1 & 1 & 0 & 0 & 1 \end{pmatrix}$$

$$\mathbf{M} = \begin{pmatrix} 1 & 1 & -1 & -1 & 1 & -1 & 0 & 0 \\ 1 & -1 & 1 & -1 & 0 & 0 & 1 & -1 \\ 0 & 0 & 0 & 0 & 1 & 1 & 1 & 1 \end{pmatrix}$$

FIG. 15

EP 4 050 472 A1

```
COEFFICIENT MATRIX
    GENERATION
```

$$\mathbf{V} = \begin{pmatrix} 1 & 1 & -1 & -1 & 0 & 0 & 0 & 0 & 0 & 0 \\ 0 & 0 & 0 & 0 & 1 & 1 & -1 & -1 & 0 & 0 \\ 0 & 0 & 0 & 0 & 0 & 0 & 0 & 0 & 1 & 1 \end{pmatrix}$$

$$\mathbf{y} = \begin{pmatrix} 0 \\ 0 \\ 1 \end{pmatrix}$$

```
PSEUDO-MULTI-SPIN
FLIP TERM ADDITION
```

$$\mathbf{V} = \begin{pmatrix} 1 & 1 & -1 & -1 & 0 & 0 & 0 & 0 & 0 & 0 & 1 & 1 & -1 & -1 & 1 & -1 & 0 & 0 \\ 0 & 0 & 0 & 0 & 1 & 1 & -1 & -1 & 0 & 0 & 1 & -1 & 1 & -1 & 0 & 0 & 1 & -1 \\ 0 & 0 & 0 & 0 & 0 & 0 & 0 & 0 & 1 & 1 & 0 & 0 & 0 & 0 & 1 & 1 & 1 & 1 \end{pmatrix}$$

$$\underbrace{\hspace{6cm}}_{M}$$

```
HAMILTONIAN
GENERATION
```

# FIG. 16

PSEUDO-MULTI-SPIN FLIP TERM ADDITION

HAMILTONIAN GENERATION

ANNEALING COMPUTER

$$\mathbf{b} = (-318 \;\; -318 \;\; 318 \;\; 318 \;\; -266 \;\; -266 \;\; 266 \;\; 266 \;\; 610 \;\; 610 \;\; -584 \;\; -52 \;\; 52 \;\; 584 \;\; 292 \;\; 928 \;\; 344 \;\; 876)$$

$$W = \begin{pmatrix}
83 & 83 & -83 & -83 & 73 & 73 & -73 & -73 & -159 & -159 & 156 & 10 & -10 & -156 & -76 & -242 & -86 & -232 \\
83 & 83 & -83 & -83 & 73 & 73 & -73 & -73 & -159 & -159 & 156 & 10 & -10 & -156 & -76 & -242 & -86 & -232 \\
-83 & -83 & 83 & 83 & -73 & -73 & 73 & 73 & 159 & 159 & -156 & -10 & 10 & 156 & 76 & 242 & 86 & 232 \\
-83 & -83 & 83 & 83 & -73 & -73 & 73 & 73 & 159 & 159 & -156 & -10 & 10 & 156 & 76 & 242 & 86 & 232 \\
73 & 73 & -73 & -73 & 509 & 509 & -509 & -509 & -133 & -133 & 582 & -436 & 436 & -582 & -60 & -206 & 376 & -642 \\
73 & 73 & -73 & -73 & 509 & 509 & -509 & -509 & -133 & -133 & 582 & -436 & 436 & -582 & -60 & -206 & 376 & -642 \\
-73 & -73 & 73 & 73 & -509 & -509 & 509 & 509 & 133 & 133 & -582 & 436 & -436 & 582 & 60 & 206 & -376 & 642 \\
-73 & -73 & 73 & 73 & -509 & -509 & 509 & 509 & 133 & 133 & -582 & 436 & -436 & 582 & 60 & 206 & -376 & 642 \\
-159 & -159 & 159 & 159 & -133 & -133 & 133 & 133 & 305 & 305 & -292 & -26 & 26 & 292 & 146 & 464 & 172 & 438 \\
-159 & -159 & 159 & 159 & -133 & -133 & 133 & 133 & 305 & 305 & -292 & -26 & 26 & 292 & 146 & 464 & 172 & 438 \\
156 & 156 & -156 & -156 & 582 & 582 & -582 & -582 & -292 & -292 & 738 & -426 & 426 & -738 & -136 & -448 & 290 & -874 \\
10 & 10 & -10 & -10 & -436 & -436 & 436 & 436 & -26 & -26 & -426 & 446 & -446 & 426 & -16 & -36 & -462 & 410 \\
-10 & -10 & 10 & 10 & 436 & 436 & -436 & -436 & 26 & 26 & 426 & -446 & 446 & -426 & 16 & 36 & 462 & -410 \\
-156 & -156 & 156 & 156 & -582 & -582 & 582 & 582 & 292 & 292 & -738 & 426 & -426 & 738 & 136 & 448 & -290 & 874 \\
-76 & -76 & 76 & 76 & -60 & -60 & 60 & 60 & 146 & 146 & -136 & -16 & 16 & 136 & 70 & 222 & 86 & 206 \\
-242 & -242 & 242 & 242 & -206 & -206 & 206 & 206 & 464 & 464 & -448 & -36 & 36 & 448 & 222 & 706 & 258 & 670 \\
-86 & -86 & 86 & 86 & 376 & 376 & -376 & -376 & 172 & 172 & 290 & -462 & 462 & -290 & 86 & 258 & 548 & -204 \\
-232 & -232 & 232 & 232 & -642 & -642 & 642 & 642 & 438 & 438 & -874 & 410 & -410 & 874 & 206 & 670 & -204 & 1080
\end{pmatrix}$$

# FIG. 17

STEP 1. CALCULATE GSO COEFFICIENT $\mu_{j,k}$ ($1 \leq k \leq j \leq n$) OF B (SEE NEXT ITEM)
STEP 2. for $j=i$ down to 1:
    for $k=i$ down to $j$:
        for $\ell=1$ to $i(N-1)$:
            $\mathbf{V}[j][\ell] = \mathbf{V}[j][\ell] - \lfloor \mu_{k,j} * \mathbf{V}[k][\ell] \rceil$
STEP 3. for $j=i-1$ down to 1:
    for $k=i$ down to $j$:
        $\mathbf{y}[j] = \mathbf{y}[j] - \lfloor \mu_{k,j} * \mathbf{y}[k] \rceil$

//CONNECT MATRIX M TO MATRIX V
STEP 1. EXPAND V TO $i \times \{(N-1)i + M\}$ MATRIX
STEP 2. for $j=1$ to $i$:
    for $k=1$ to $M$:
        $\mathbf{V}[j][(i-1)N+k] = \mathbf{M}[j][k]$

COEFFICIENT MATRIX GENERATION PROCESSING

APPROXIMATION PROCESSING

ADDITION PROCESSING

HAMILTONIAN GENERATION PROCESSING

HAMILTONIAN $H = -x^T W x - bx + c$
(x IS BINARY VARIABLE VECTOR WITH LENGTH $i(N-1) + m$)

... EQUATION (z)

EP 4 050 472 A1

# FIG. 18

INFORMATION PROCESSING DEVICE ⌇10

MEMORY ⌇10c

PROCESSOR ⌇10d

COMMUNICATION DEVICE ⌇10a

HDD ⌇10b

Europäisches
Patentamt

European
Patent Office

Office européen
des brevets

# EUROPEAN SEARCH REPORT

**Application Number**

EP 21 20 9344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID JOSEPH ET AL: "Two quantum Ising algorithms for the Shortest Vector Problem: one for now and one for later", ARXIV.ORG, CORNELL UNIVERSITY LIBRARY, 201 OLIN LIBRARY CORNELL UNIVERSITY ITHACA, NY 14853, 3 November 2020 (2020-11-03), XP081804510, * sections II, III; figures 1,2 * | 1-6 | INV. G06F7/544 |
| A | DAVID JOSEPH ET AL: "Not-so-adiabatic quantum computation for the shortest vector problem", ARXIV.ORG, CORNELL UNIVERSITY LIBRARY, 201 OLIN LIBRARY CORNELL UNIVERSITY ITHACA, NY 14853, 23 October 2019 (2019-10-23), XP081648795, DOI: 10.1103/PHYSREVRESEARCH.2.013361 * sections II, III * | 1-6 | |
| A | US 2020/133995 A1 (MANDAL AVRADIP [US] ET AL) 30 April 2020 (2020-04-30) * paragraph [0017] – paragraph [0064] * * paragraph [0082] – paragraph [0087] * | 1-6 | **TECHNICAL FIELDS SEARCHED (IPC)** G06F |

The present search report has been drawn up for all claims

| Place of search | Date of completion of the search | Examiner |
|---|---|---|
| Munich | 22 April 2022 | Tenbieg, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 21 20 9344**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-04-2022**

| Patent document cited in search report | | Publication date | Patent family member(s) | | Publication date |
|---|---|---|---|---|---|
| US 2020133995 | A1 | 30-04-2020 | JP | 2020071877 A | 07-05-2020 |
| | | | US | 2020133995 A1 | 30-04-2020 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009223848 A
- WO 2018529142 A
- US 20090299947
- US 20180218279